## Europäisches Patentamt
## European Patent Office
## Office européen des brevets

(19)

(11) Numéro de publication: **0 021 887**
**B1**

(12)

# FASCICULE DE BREVET EUROPEEN

(45) Date de publication du fascicule du brevet: **19.10.83**

(51) Int. Cl.³: **G 01 S 17/02, G 01 S 3/78, G 01 J 1/04**

(21) Numéro de dépôt: **80400746.6**

(22) Date de dépôt: **28.05.80**

(54) **Dispositif optoélectrique de détection, notamment de rayonnement laser.**

(30) Priorité: **08.06.79 FR 7914718**

(43) Date de publication de la demande:
**07.01.81 Bulletin 81/1**

(45) Mention de la délivrance du brevet:
**19.10.83 Bulletin 83/42**

(84) Etats contractants désignés:
**DE GB NL SE**

(56) Documents cités:
**DE - B - 1 240 295**
**FR - A - 1 382 253**
**GB - A - 1 193 567**
**GB - A - 1 497 411**
**US - A - 2 836 098**
**US - A - 3 092 162**
**US - A - 3 205 796**
**US - A - 3 954 340**
**US - A - 3 977 628**
**US - A - 4 093 384**
**US - A - 4 153 368**

(73) Titulaire: **THOMSON-CSF**
**173, Boulevard Haussmann**
**F-75379 Paris Cedex 08 (FR)**

(72) Inventeur: **Jourdan, François**
**"THOMSON-CSF" SCPI 173, Bld Haussmann**
**F-75360 Paris Cedex 08 (FR)**
Inventeur: **Marquet, Patrice**
**"THOMSON-CSF" SCPI 173, Bld Haussmann**
**F-75360 Paris Cedex 08 (FR)**
Inventeur: **Ternant, François**
**"THOMSON-CSF" SCPI 173, Bld Haussmann**
**F-75360 Paris Cedex 08 (FR)**

(74) Mandataire: **Trocellier, Roger et al,**
**THOMSON-CSF SCPI 173, Bld Haussmann**
**F-75379 Paris Cedex 08 (FR)**

Courier Press, Leamington Spa, England.

Dispositif optoélectrique de détection, notamment de rayonnement laser

La présente invention concerne un dispositif optoélectrique de détection destiné plus particulièrement à la détection de rayonnement laser.

L'illuminateur laser intervient de plus en plus dans l'équipement des systèmes d'armes, notamment dans:

— la télémétrie laser de conduite de tir,
— le guidage d'armes par illumination laser,
— la désignation d'objectifs par marquage de cible au laser.

Au sol, les véhicules, blindés, ou non, sont parmi les plus menacés par les types d'armes précités et il est donc impératif d'assurer leur protection par une détection laser en vue de contre-mesures. A noter que la détection laser peut être prévue pour identifier une illumination amie dans la cadre d'un système d'identification ami-ennemi, cette application pouvant être produite conjointement avec celle précitée, et vice versa.

Quelle que soit l'application envisagée pour la détection du rayonnement laser, qu'il soit attendu ou non, il est nécessaire que le dispositif de détection installé à bord de véhicules exerce une surveillance omnidirectionnelle en gisement dans la totalité du champ panoramique de 360 degrés, et de plusieurs dizaines de degrés en site. Il faut également que l'espace surveillé soit couvert en permanence, un dispositif à balayage ou à tête optique tournante ne pouvant convenir car il ne permettrait pas la détection sûre d'un illuminateur laser à impulsions brèves tel un laser YAG.

On se rend aisément compte que pour ne pas multiplier outre mesure le nombre de dispositifs détecteurs, dits capteurs, il est primordial que chacun d'eux présente un champ de réception assez grand, par exemple de plusieurs dizaines de degrès à la fois en site en en gisement. Néanmoins un dertain nombre de dispositifs dé tecteurs doit être réparti sur le véhicule pour exercer la couverture panoramique globale tout en tenant compte de la faible divergence présentée par le faisceau laser. En conséquence, le critère de champ est à compléter par des exigences de compacité, de conception et d'installation aisées, de roubustesse et de faible coût, qui sont conventionnelles pour des matériels militaires.

Un objet de l'invention est de réaliser un détecteur laser répondant à de telles exigences en vue d'équiper des véhicules terrestres ou autres.

Un dispositif détecteur de rayonnement comporte généralement un détecteur photoélectrique associé à une optique de réception du rayonnement provenant du champ observé par l'ensemble. Dans le cadre d'une réalisation simple, l'optique est constituée par un lentille unique constituant un dioptre de focalisation du rayonnement sur la surface photosensible du détecteur, située dans le plan focal correspondant. Cette solution simple présente deux inconvénients majeurs. D'une part, si l'éclairement auquel est soumis la lentille devient brusquement intense et c'est généralement le cas lorsqu'on reçoit des impulsions d'illuminateurs laser, le flux lumineux est concentré par la focalisation et risque d'endommager, voir de détruire le photodétecteur qui peut consister en une simple diode photoréceptrice. D'autre part, la recherche d'une solution peu onéreuse contraint à utiliser des photodétecteurs de faibles dimensions et comme le diamètre de la pupille recherchée est nettement supérieure, la longueur focale de la lentille reste beaucoup plus élevée que le diamètre de la surface photosensible; il en résulte un champ de réception assez limité.

Afin d'éliminer ces deux inconvénients, une solution consiste à défocaliser le détecteur en le rapprochant de la lentille. Dans ce concept, le champ peut être notablement accru mais d'autres inconvénients surgissent. Seule une fraction du faisceau incident parvient sur le détecteur et la surface utile de la pupille d'entrée devient rapidement très faible. En outre, si la zone utile correspondante de la lentille se trouve occultée, par exemple par une tache de boue, la détection n'aura pas lieu pour les incidences comprises dans l'angle solide correspondant d'occultation du détecteur. La fiabilité du dispositif peut être très affaiblie.

Pour répondre au problème posé, il reste deux alternatives; la première est de recourir à une optique plus complexe, ce qui va à l'encontre des critères de compacité, de tenue mécanique et principalement de coût; la deuxième alternative, utilisée selon l'invention, est de recourir à une conception nettement différente du récepteur optique suivant laquelle on n'utilise pas d'optique de formation d'image.

Il est connu par le document de brevet US—A—3 091 162 un dispositif détecteur de rayonnement lumineux, destiné à une caméra zoom, et qui comporte des moyens de reception optique du rayonnement incident provenant du champ observé, centrés sur l'axe optique du récepteur et formés par un groupement de deux diaphragmes délimitant le champ d'observation, par un élément diffuseur plan pour diffuser par transmission le rayonnement incident ainsi que, en aval, des moyens de photodétection avec une surface réceptrice du rayonnement diffusé.

Il est connu par ailleurs, par le document de brevet DE—B—1 240 295 un dispositif qui, au lieu d'une lame en verre dépoli, ou moyen analogue, utilise, en tant qu'élément diffuseur, une peinture pour diffuser par réflexion une partie du rayonnement incident vers la surface réceptrice d'un détecteur.

Il est connu également d'utiliser un conducteur de lumière en fibre optique pour permettre de disposer à distance un dispositif détecteur. A titre d'exemple, le document de brevet GB—A—1 193 567 décrit un dispositif de visée et de télémètrie laser où l'écho laser est conduit à un photodétecteur par le biais d'une fibre optique.

Selon l'invention, il est proposé un dispositif détecteur laser dans lequel le récepteur optique combiné à un détecteur photosensible comporte, un groupement de diaphragmes délimitant le champ, un moyen sous forme d'une peinture pour diffuser par réflexion le rayonnement reçu en chacun de ses points et un miroir pour réfléchir le rayonnement diffusé par la peinture et le renvoyer notamment vers la surface réceptrice du détecteur, en sorte qu'une fraction non nulle de l'énergie lumineuse transportée par chaque rayon incident diffusé atteint le détecteur.

Selon l'invention telle que revendiquée, il est proposé un dispositif optoélectrique de détection, notamment de rayonnement laser, comportant des moyens de réception optique du rayonnement incident provenant du champ observé centré sur l'axe optique dudit récepteur et formés par un groupement de deux diaphragmes délimitant le champ d'observation et par un élément plan pour diffuser le rayonnement incident, et des moyens de photodétection avec une surface réceptrice de rayonnement diffusé, caractérisé en ce que l'élément diffuseur est produit au moyens d'une peinture diffusante qui diffuse par réflexion une partie du rayonnement incident vers la surface réceptrice, et que les moyens de réception optique comportent, en outre, un miroir pour réfléchir le rayonnement diffusé par la peinture en direction de la surface réceptrice placée vis à vis dudit miroir.

Les particularités et avantages de la présente invention apparaîtront au cours de la description qui suit donnée à titre d'exemple non limitatif à l'aide des figures annexées qui représentent:

— les figures 1, 2 et 3 des schémas simplifiés d'un dispositif de détection conforme à l'invention;
— la figure 4, le lobe de réception du dispositif selon la figure 1, 2 ou 3;
— la figure 5, un schéma relative une réalisation procurant un champ de réception de section rectangulaire;
— les figures 6 et 7, des schémas simplifiés d'une solution préférée pour un dispositif de détection selon l'invention;
— la figure 8, un schéma relatif à une variante de montage;
— la figure 9, un schéma d'un exemple de réalisation du dispositif selon la figure 6 ou 7;
— la figure 10, un schéma d'une réalisation préférée pour le dispositif selon la figure 6 ou 7;
— la figure 11, une courbe de variation de la sensibilité en fonction de l'angle d'incidence pour un dispositif détecteur selon la figure 1, 2, 3, 5, 6, 7, 8 ou 9;
— les figures 12, 13 et 14, des schémas relatifs au fonctionnement d'un dispositif détecteur selon la figure 10; et
— la figure 15, une courbe de variation de la sensibilité en fonction de l'angle d'incidence pour un dispositif détecteur selon la figure 10.

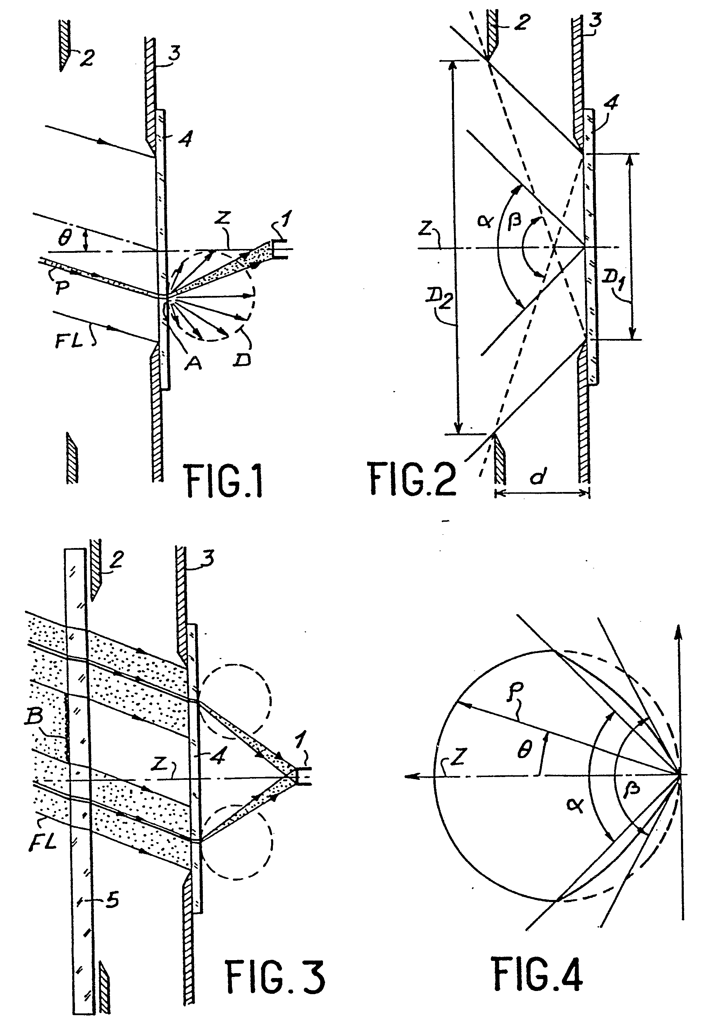

En se reportant à la figure 1, de dispositif comporte le détecteur proprement dit 1 et la partie optique, dite récepteur optique, formée de deux diaphragmes 2 et 3 et d'un dispositif optique diffusant 4. Le détecteur optoélectrique 1 peut être situé à distance et remplacé par l'embout d'une fibre optique dont l'autre extrémité sera alors disposée à proximité du détecteur. Chaque princeau lumineux P d'un faisceau FL reçu d'incidence $\theta$ représenté, va être réparti selon un diagramme de diffusion déterminé D. Le dispositif optique diffusant 4 est dans ce premier mode de réalisation une lame de verre dépoli ou de verre opalin. On peut admettre en première approximation que le verre 4 se comporte en chaque point A de sa face dépolie, c'est-à-dire celle orientée vers le détecteur comme une source lambertienne et présente un diagramme de diffusion sensiblement circulaire. Ainsi de chaque point éclairé A de la face dépolie une fraction de la lumière reçue selon le pinceau P correspondant se trouve transmise par diffusion en direction de la surface réceptrice de l'élément 1 (détection optoélectrique ou fibre optique). Cette fraction est mise en valeur sur la représentation de la figure 1.

La pupille optique présentée par le dispositif est délimitée par le diaphragme 3. Dans la version représentée sur les figures 1 et 2, le diagramme 3 est en contact avec la lame 4 et la pupille est constituée par la zone laissée à nu de la lame, un cercle de diamètre D1 dans le cas d'une réalisation circulaire autour d'un axe optique Z sur lequel est aligné le détecteur 1. L'ensemble des deux diaphragmes délimite le champ, $\alpha$ représentant le champ de pleine lumière et $\beta$ le champ total. La valeur $\alpha$ est donnée par:

$$\mathrm{tg}\frac{\alpha}{2} = \frac{D2-D1}{2d}$$

où D2 est le diamètre du diaphragme 2 et $d$ la distance séparant les diaphragmes; de même, la valeur $\beta$ est donnée par:

$$\mathrm{tg}\frac{\beta}{2} = \frac{D1+D2}{2d}$$

Tant que la valeur d'incidence $\theta$ reste inférieure à $\alpha/2$, le diaphragme de champ 2 ne joue pas, seul le diaphragme 3 dit d'ouverture ou de pupille, limite la surface éclairée de verre 4. Pour une incidence comprise entre $\alpha/2$ et $\beta/2$ il y a vignettage, c'est-à-dire qu'une fraction de la zone de diamètre D1 est éclairée, cette fraction allant en diminuant au fur et à mesure que l'on se rapproche de $\beta/2$ et devient nulle pour cette valeur et au-delà.

Sur la figure 3, le dépôt B représente par exemple une tache de boue sur un hublot 5 protégeant l'optique de l'extérieur. La tache B intercepte une partie du faisceau FL à détecter et crée une ombre sur le verre dépoli 4. Comme on peut s'en rendre compte, toute la surface restante de la lame qui est éclairée transmet une fraction de la lumière reçue vers le détecteur 1. La présence de la tache se traduit certes par une perte de sensibilité mais n'aveugle pas l'optique comme ce pourrait être le cas dans une solution à dioptre et détecteur défocalisé signalée précédemment.

La figure 4 représente le lobe de réception de l'optique. Pour les incidences $\theta$ inférieure à $\alpha/2$ le lobe suit la loi

$$\rho = K \cos \theta$$

et est circulaire. Pour $\alpha/2 < \theta < \beta/2$ la variation est plus complexe car elle dépend d'un plus grand nombre de paramètres faisant intervenir en particulier la forme des diaphragmes (paramètres D1 et D2) et la distance les séparant (paramètre $d$). Avec l'optique qui vient d'être décrite le champ de pleine lumière peut être très important, atteindre par exemple 90° sans difficulté, et répondant bien au problème posé.

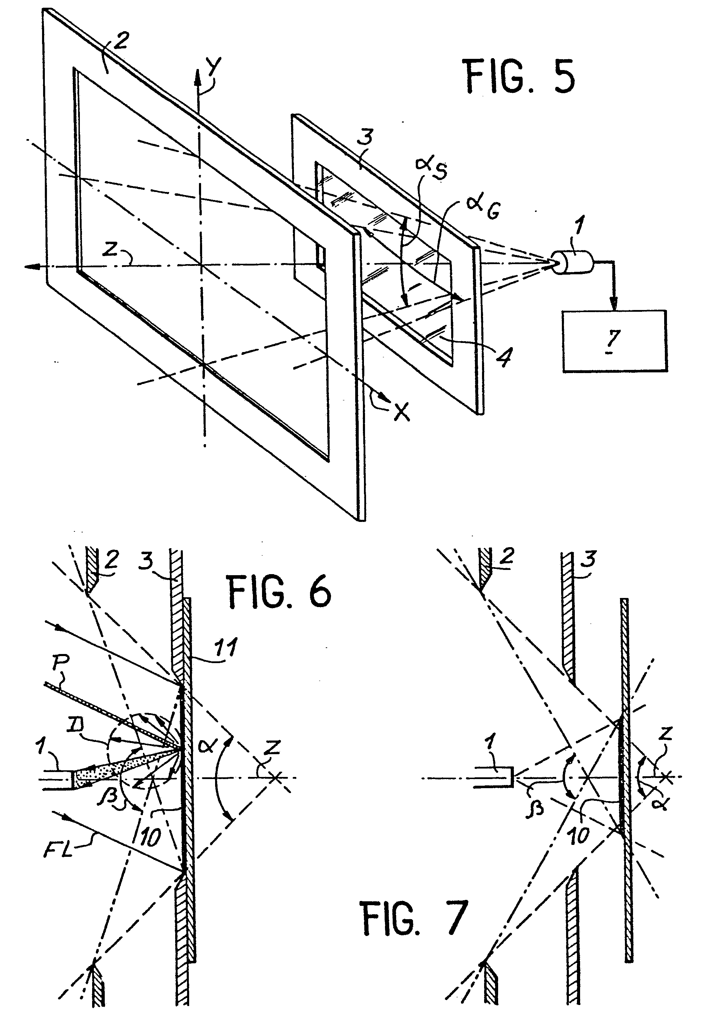

Comme le montre la figure 5, le récepteur optique se révèle d'une grande souplesse d'utilisation. La couverture d'un champ non circulaire mais par exemple de section rectangulaire ou carré, est obtenue aisément avec des diaphragmes de forme appropriée. Ainsi, les diaphragmes de forme rectangulaire représentés déterminent les angles de champ différents $\alpha_s$ en site et $\alpha_G$ gisement.

La figure 6 représente une amélioration du récepteur optique dans lequel l'élément optique diffuseur est réalisé différemment, la lame de verre dépoli étant remplacée par une peinture diffusante 10 déposée sur un support mécanique 11. La couche 10 est disposée du côté du rayonnement incident et le détecteur 1 est placé en vis-à-vis du même côté. La couche de peinture 10 se comporte sensiblement comme une source lambertienne et chaque pinceau lumineux P est dans ce concept diffusé par réflexion au lieu de l'être par transmission. Ce mode de réalisation du diffuseur est préféré car il présente d'indéniables avantages. D'une part, le dispositif est compact car le photodétecteur 1 et les diaphragmes 2—3 sont d'un même côté de la plaque diffusante 10—11 au lieu d'être de part et d'autre d'un verre dépoli 4 (Figs. 2, 3 et 4). D'autre part, le coefficient de transmission des verres dépolis ou opalins utilisables pour l'optique précédente ne peut guère être meilleur qu'environ 10%, tandis que le coefficient de réflexion de peintures diffusantes peut atteindre 70%. Cette dernière solution présente ainsi une bien meilleure sensibilité. Le gain correspondant permit notamment de compenser les pertes d'insertion et de transmission d'un élément de fibre reliant l'optique à un détecteur éloigné.

Quelle que soit la solution retenue, l'élément diffuseur est réalisé de préférence selon une forme plane, compte tenu de la non directivité du diagramme en chaque point et de la plus grande simplicité de réalisation.

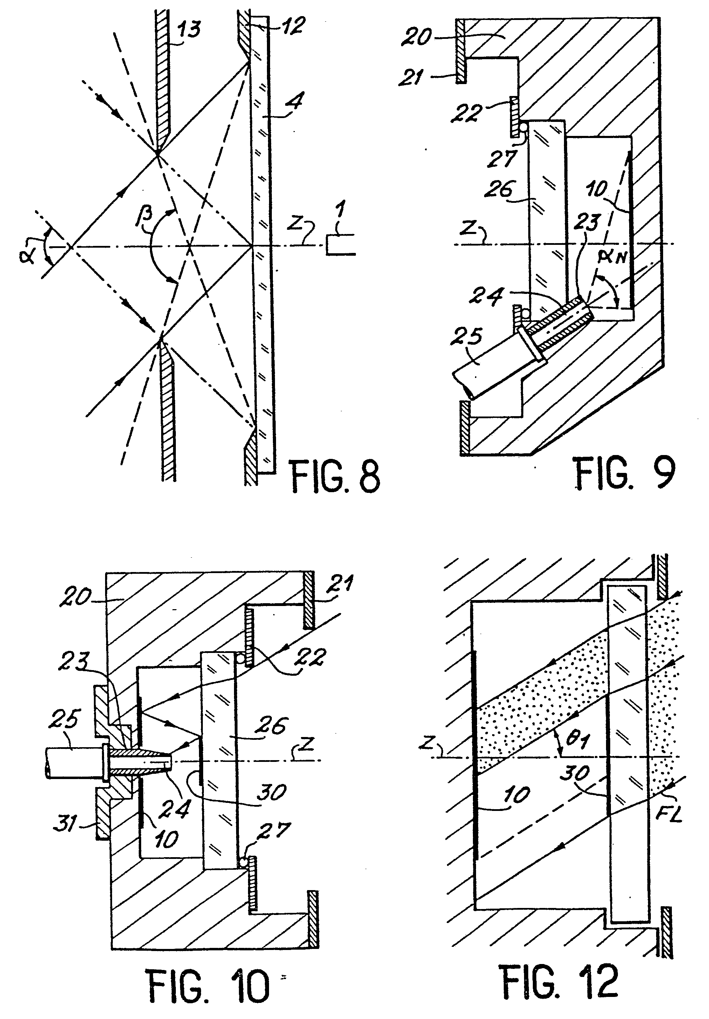

La figure 7 illustre une autre disposition possible, l'élément diffuseur étant positionné à distance du diaphragme 3 et non plus accolé à ce dernier. L'étendue de la couche diffusante 10 est limitée au moins à la zone utile déterminée par le champ de pleine lumière $\alpha$. Il est encore possible d'inverser le rôle des deux diaphragmes comme le montre la figure 8 où les diaphragmes 12 et 13 assurent respectivement les fonctions des diaphragmes 2 et 3 précédents. Les diaphragmes peuvent être produits par des arêtes vives de pièces mécaniques incorporées dans le montage de l'ensemble.

La figure 9 présente un premier mode possible de réalisation de la solution à peinture diffusante. Un bloc mécanique 20 supporte l'ensemble; il comporte une surface plane sur laquelle est effectué le dépôt de peinture diffusante. Des pièces 21, 22 solidaires du bloc 20 forment les diaphragmes. La réception lumineuse du rayonnement diffusé par réflexion s'effectue en extrémité d'un embout de conducteur à fibres optiques. On distingue l'embout d'extrémité 23 entourant une fibre ou un faisceau de fibres 24, le câble optique gainé 25 étant couplé par son autre extrémité non figurée à un photodétecteur, par exemple une diode PN ou PIN pour la détection dans la bande des 1,06 $\mu$m. Un hublot 26 et un joint d'étanchéité 27 complètent le montage pour protéger le dispositif. Le hublot sert, en outre, de filtre éliminateur de spectre non utile. Par exemple, pour la détection à 1,06 $\mu$m précitée le hublot peut être en un verre RG 850 qui élimine toutes les radiations de longueur d'onde inférieures à 0,85 $\mu$m. La disposition inclinée de l'extrémité du conducteur optique 24 par rapport à la surface 10 permet d'une part, de réduire notablement l'occultation relativement à une position axiale selon Z de ce conducteur, d'autre part, de réduire la valeur d'ouverture numérique $\alpha_n$ nécessaire pour couvrir toute la surface utile 10 de diffusion; ce dernier point permet d'utiliser des fibres optiques de plus faible coût.

La figure 10 représente le mode préféré de réalisation d'un dispositif détecteur conforme à l'invention. Afin de remédier à la disposition peu pratique du conducteur optique dans la version précédente, car sortant vers l'avant du dispositif, un miroir réfléchissant 30 est introduit sur le trajet optique entre la surface diffusante 10 et l'extrémité de la fibre 24 (ou d'un photodétecteur). Le miroir 30 est avantageusement réalisé par dépôt partiel sur la face du hublot filtrant 26 disposé en regard de la couche 10. Selon cette disposition, l'embout 23 se retrouve disposé vers l'arrière pour recevoir le rayonnement réfléchi par le miroir et peut aisément être disposé axialement, maintenu dans le bloc support 20 par une embase 31. Le conducteur optique émerge de l'arrière du dispositif ce que confère une plus grande souplesse d'exploitation.

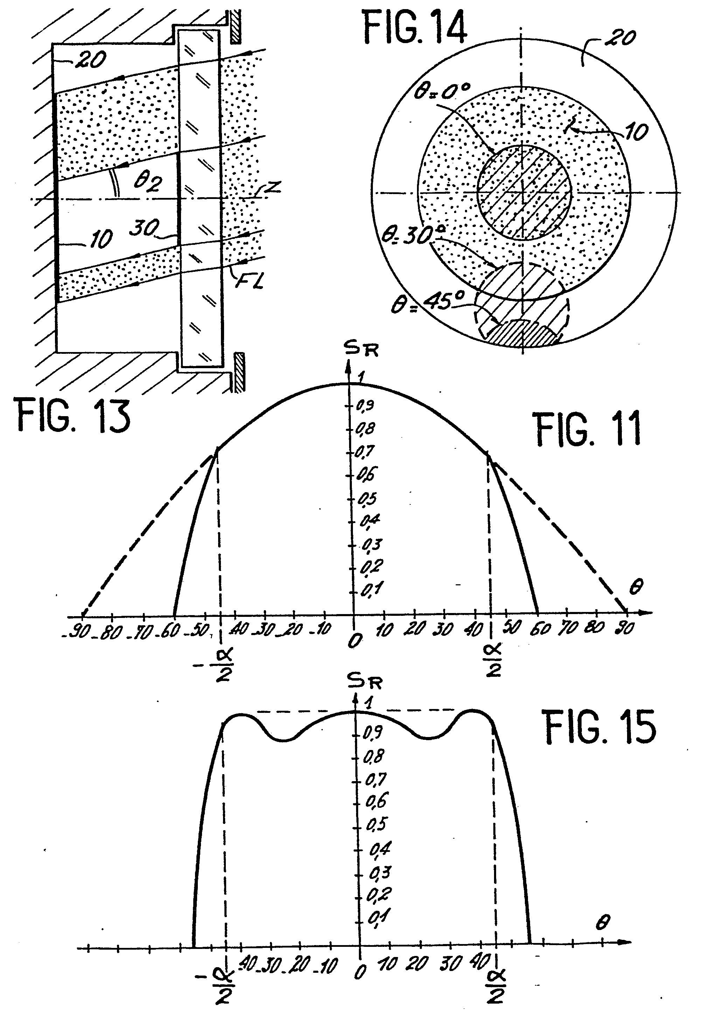

La sensibilité des dispositifs détecteurs correspondant aux figures 1 à 9 est proportionnelle au cosinus de l'incidence $\theta$ du faisceau laser par rapport à l'axe du système, pour les valeurs de $\theta$ inférieures à $\alpha/2$. Cela tient au fait que le comportement des diffuseurs envisagés (verre opalin ou peinture) est très proche de celui d'un diffuseur lambertien parfait. La figure 11 traduit l'allure en fonction de l'incidence $\theta$, de la sensiblité de tels dispositifs optoélectriques de détection, conçus pour avoir un champ de pleine lumière $\alpha$ égal à 90°. Cette sensibilité est exprimée en valeur relative par rapport à la sensibilité maximale qui est obtenue dans l'axe du système. La courbe de la figure il n'est, en fait, que la traduction en coordonnées cartésiennes de la courbe exposée à la figure 4 exprimée, elle, en coordonnées polaires. On voit que pour les fortes incidences c'est-à-dire $\theta$ proche des valeurs limites:

$$\pm \frac{\alpha}{2} = \pm 45°$$

du champ de pleine lumière, la sensibilité présente déjà une chute notable, de l'ordre de 30%, par rapport à la direction axiale ($\theta=0$) et pour des valeurs plus élevées de $\theta$ la chute est encore bien plus rapide. Cette forme de variation finale est avantageuse car le rayonnement net des lobes à $\pm 45°$ permet plus aisément de discriminer les directions dans une formule comportant une pluralité de dispositifs détecteurs et facilite leur implantation sur le véhicule. Par contre, dans la plage utile correspondant au champ de

$$-\frac{\alpha}{2} \text{ à } +\frac{\alpha}{2}$$

il est préférable que le récepteur optique présente une sensibilité à peu près uniforme.

Un autre avantage procuré par la solution préférée selon la figure 10 réside dans la correction apportée en ce sens à la courbe de sensibilité grâce à l'occultation introduite par le miroir 30. Comme le montre le figures 12, 13, 14 où par souci de simplification certains éléments ne sont pas représentés, le miroir 30 produit une occultation centrale du rayonnement incident FL. L'ombre portée correspondante sur le plan de la surface diffusante 10 est située soit entièrement dans la zone couverte par la peinture 10 (Fig. 13), soit partiellement (Fig. 12) selon la valeur de l'incidence $\theta$. Pour les valeurs assez faibles du $\theta$ de 0 à environ $\pm 30°$ selon cet exemple, l'ombre portée est totale dans l'aire 10 (Fig. 14), ensuite elle n'est que partielle ce qui accroît la sensibilité du dispositif. En fait, l'accroissement de sensibilité résulte également de ce que la partie centrale de l'aire 10 qui est occultée pour de faibles incidences devient progressivement éclairée lorsque l'incidence augmente; or, c'est dans la partie centrale que la contribution à la sensibilité est la plus forte de par la position axiale des éléments de la combinaison, en particulier, de l'embout de fibre réceptrice ou du photodétecteur. La figure 15 traduit la courbe de réponse correspondante.

La solution à miroir, préférée, présente également de bonnes caractéristiques de compacité grâce en particulier au repliement du trajet optique par réflexions. La pupille optique est constituée par la surface utile diffusante vue par le photodétecteur ou le conducteur optique, via réflexion sur le miroir.

Il y a lieu de remarquer que le positionnement d'un photodétecteur sur l'axe optique constitué par l'axe de symétrie du montage n'est pas critique pour autant que cet élément ne soit ni trop rapproché, ni trop éloigné de l'élément diffusant. Dans le premier cas, la partie active de l'élément diffusant, c'est-à-dire celle procurant un renvoi d'énergie lumineuse notable vers le détecteur devient de plus en plus faible et dans le second cas, l'énergie lumineuse collectée s'affaiblit de plus en plus ainsi qui la sensibilité. Dans le case de fibres optiques, le positionnement optimal est aisément déterminé en tenant compte des caractéristiques d'ouverture numérique des fibres.

Les dispositifs optoélectriques de détection décrits peuvent servir à détecter tout rayonnement de niveau suffisant sans nécessiter de formation d'image. Ils peuvent éventuellement entrer dans la composition d'un appareil de mesure d'éclairement. Leur application est cependant plus particulièrement envisagée pour réaliser un dispositif de contre-mesures laser ou un répondeur IFF laser. Les circuits de traitement et autres moyens correspondants alimentés par le détecteur sont symbolisés par le bloc 7 sur la figure 5 et sont considérés réalisés selon des techniques connues.

De nombreuses variantes conformes aux caractéristiques de la présente invention sont possibles, par exemple:

— plusieurs éléments détecteurs sensibles à des gammes de longueur d'ondes différentes peuvent remplacer un unique élément 1;

— la pluralité de détecteurs pouvant être situés à distance reliés par une ou plusieurs fibres et coupleurs optiques à une unique extrémité 24, etc...

**Revendications**

1. Dispositif optoélectrique de détection, notamment de rayonnement laser, comportant des moyens de réception optique du rayonnement incident provenant du champ observé centré sur l'axe optique (Z) dudit récepteur et formés par un groupement de deux diaphragmes (2—3) délimitant de champ d'observation et par un élément diffuseur plan (4) pour diffuser le rayonnement incident, et des moyens de photodétection (1) avec une surface réceptrice de rayonnement diffusé, caractérisé en ce que l'élément diffuseur est produit au moyen d'une peinture diffusante (10) qui diffuse par réflexion une partie du rayonnement incident vers la surface réceptrice, et que les moyens de réception optique comportent, en outre, un miroir (30) pour réfléchir le rayonnement diffusé par la peinture en direction de la surface réceptrice placée vis à vis dudit miroir.

2. Dispositif selon la revendication 1, caractérisé en ce que le miroir (30) est centré sur l'axe optique (Z) et disposé sur une surface plane d'un hublot de protection (26) en matériau transparent déterminé pour former un filtre optique sélectionnant la bande d'exploitation.

3. Dispositif selon la revendication 1 ou 2, caractérisé en ce que ladite surface réceptrice est celle d'une ou plusieurs diodes photosensibles, ou la surface d'extrêmité d'un conducteur (25) à fibre optique (24) couplé par son autre extrêmité aux moyens de photo-détection proprement dits placés à distance.

4. Dispositif selon l'une quelconque des revendications 1 à 3, caractérisé en ce que les diaphragmes (21, 22), le miroir (30) et la surface réceptrice des moyens de photodétection (1) sont situés d'un même côté de l'élément diffuseur (10) et que la peinture diffusante (10) est disposée sur une surface plane d'une pièce mécanique (20) formant support de l'ensenble du dispositif.

5. Dispositif optoélectrique de détection, notamment de rayonnement laser, comportant des moyens de réception optique du rayonnement incident provenant du champ observé centré sur l'axe optique (Z) dudit récepteur et formés par un groupement de deux diaphragmes (2—3) délimitant le champ d'observation et par un élément diffuseur plan (4) pour diffuser le rayonnement incident, et des moyens de photodétection (1) avec une surface réceptrice de rayonnement diffusé, caractérisé en ce que l'élément diffuseur est produit au moyen d'une peinture diffusante (10) qui diffuse par réflexion une partie du rayonnement incident vers la surface réceptrice et que la surface réceptrice est excentrée par rapport à l'axe optique (Z), constituée par une extrêmité (24) de conducteur optique (25) et disposée obliquement vis à vis de la surface diffusante.

6. Dispositif selon la revendication 5, caractérisé en ce que les diaphragmes (21, 22) et la surface réceptrice des moyens de photodétection (1) sont situés d'un même côté de l'élément diffuseur (10) et que la peinture diffusante (10) est disposée sur une surface plane d'une pièce mécanique (20) formant support de l'ensemble du dispositif.

7. Dispositif selon la revendication 5 ou 6, caractérisé en ce au le récepteur optique comporte, en outre, un hublot de protection (26) en matériau transparent déterminé pour former un filtre optique sélectionnant la bande d'exploitation.

8. Utilisation d'un dispositif optoélectrique de détection selon l'une quelconque des revendications 1 à 7 pour réaliser un dispositif de détection de rayonnement laser et caractérisé en ce qu'il est prévu des moyens de traitement des signaux détectés (7) répondant à l'application contre-mesure et/ou répondeur IFF.

**Patentansprüche**

1. Optoelektrische Detektorvorrichtung, insbesondere für eine Laserstrahlung, mit Mitteln zum optischen Empfang der einfallenden Strahlung, die von beobachteten auf die optische Achse (Z) des Empfängers zentrierten Feld ausgeht, wobei die Mittel aus der Anordnung zweier Blenden (2—3), die das Beobachtungsfeld begrenzen, und aus einem ebenen Diffusorelement (4) bestehen, das die ankommende Strahlung streut, und mit Photodetektormitteln (1), die eine Empfangsfläche für die gestreute Strahlung aufweisen, dadurch gekennzeichnet, daß das Diffusorelement durch eine Streubeschichtung (10) gebildet wird, die einen Teil der ankommenden Strahlung auf die Empfangsfläche rückstreut, und daß die optischen Empfangsmittel außerdem einen Spiegel (30) aufweisen, von dem die an der Beschichtung rückgestreute Strahlung in Richtung auf die gegenüber dem Spiegel angebrachte Empfangsfläche abgelenkt wird.

2. Vorrichtung nach Anspruch 1, dadurch gekennzeichnet, daß der Spiegel (30) auf die optische Achse (Z) zentriert ist und auf einer ebenen Oberbläche einer Schutzhaube (26) aus transparentem Material angebracht ist, die dazu bestimmt ist, als optisches Filter zu wirken, das das Betriebsfrequenzband auswählt.

3. Vorrichtung nach Anspruch 1 oder 2, dadurch gekennzeichnet, daß die Empfangsfläche aus einer oder mehreren lichtempfindlichen Dioden oder der Stirnfläche eines Lichtleitfasern (24) enthaltenden Leiters gebildet ist, der mit seinem anderen Ende an die eigentlichen Lichtempfangsmittel, die entfernt angeordnet sind, gekoppelt ist.

4. Vorrichtung nach einem beliebigen der Ansprüche 1 bis 3, dadurch gekennzeichnet, daß die Blenden (21, 22), der Spiegel (30) und die Empfangsfläche der Photodetektormittel (1) alle auf derselben Seite eines Diffusorelements (10) angeordnet sind und daß die Streubeschichtung (10) sich auf einer ebenen Oberfläche eines mechanischen Bauteils (20) befindet, das den Träger für die gesamte Vorrichtung bildet.

5. Optoelektrische Detektorvorrichtung, insbesondere für eine Laserstrahlung, mit Mitteln zum optischen Empfang der einfallenden Strahlung, die vom beobachteten auf die optische Achse (Z) des Empfängers zentrierten Feld ausgeht, wobei die Mittel aus der Anordnung zweier Blenden (2—3), die das Beobachtungsfeld begrenzen, und aus einem ebenen Diffusorelement (4) bestehen, das die ankommende Strahlung streut, und mit Photodetektormitteln (1), die eine Empfangsfläche für die gestreute Strahlung aufweisen, dadurch gekennzeichnet, daß das Diffusorelement durch eine Streubeschichtung (10) gebildet wird, die einen Teil der ankommenden Strahlung auf die Empfangsfläche rückstreut, und daß die Empfangsfläche bezüglich der optischen Achse (Z) exzentrisch angeordnet ist und aus einem Ende (24) eines Lichtleiters (25) besteht sowie schräg bezüglich der streuenden Oberfläche angeordnet ist.

6. Vorrichtung nach Anspruch 5, dadurch gekennzeichnet, daß die Blenden (21, 22) und die Empfangsfläche der Photodetektormittel (1) auf derselben Seite des Diffusorelements (10) liegen und daß die Streubeschichtung (10) auf einer ebenen Oberfläche eines mechanischen Bauteils (20) angeordnet ist, das den Träger der ganzen Vorrichtung bildet.

7. Vorrichtung nach Anspruch 5 oder 6, dadurch gekennzeichnet, daß der optische Empfänger außerdem eine Schutzhaube (26) aus transparentem Material besitzt, die dazu bestimmt ist, ein optisches Filter zur Auswahl des Betriebsfrequenzbands zu bilden.

8. Verwendung einer optoelektrischen Detektorvorrichtung nach einem beliebigen der Ansprüche 1 bis 7 als Detektorvorrichtung für Laserstrahlung, dadurch gekennzeichnet, daß Mittel zur Auswertung der entdeckten Signale (7) vorgesehen sind, die der Anwendung als Gegenmessung und/oder IFF Responder entspricht.

## Claims

1. An optoelectric detection device, especially for a laser radiation, comprising optical reception means for the incident radiation originating from the observed field which is centered on the optical axis (Z) of the receiver, these means being constituted by the assembly of two diaphragms (2—3) which restrict the field of observation, and by an even diffusor element (4) for diffusing the incident radiation, and comprising photodetection means (1) having a surface for receiving the diffused radiation, characterized in that the diffusor element is built up by a diffusing layer (10) which diffuses by reflection a part of the incident radiation onto the receiving surface, and that the optical reception means further comprise a mirror (30) which reflects the radiation diffused from the layer onto the receiving surface which is placed opposite to the mirror.

2. A device according to Claim 1, characterized in that the mirror (30) is centered on the optical axis (Z) and is disposed on an even surface of a protection cap (26) made of transparent material, this cap being conceived to constitute an optical filter which selects the frequency band of operation.

3. A device according to Claim 1 or 2, characterized in that the receiving surface is the surface of one or more photosensible diodes or the end surface of a conductor (25) made of optical fibres (24) and coupled by its other end to the remotely placed effective photodetection means.

4. A device according to any one of Claims 1 to 3, characterized in that the diaphragms (21, 22), the mirror (30) and the receiving surface of the photodetection means (1) are situated all on one side of the diffusor element (10) and that the diffusing layer (10) is disposed on an even surface of a mechanical means (20) which constitutes the support of the entire device.

5. An optoelectric detection device, especially for a laser radiation, comprising optical reception means for the incident radiation originating from the observed field which is centered in the optical axis (Z) of the receiver, these means being constituted by the assembly of two diaphragms (2—3) which restrict the field of observation, and by an even diffusor element (4) for diffusing the incident radiation, and comprising photodetection means (1) having a surface for receiving the diffused radiation, characterized in that the diffusor element is built up by a diffusing layer (10) which diffuses by reflection a part of the incident radiation onto the receiving surface, and that the receiving surface is excentered with respect to the optical axis (Z) and is constituted by one end (24) of an optical conductor (25) and disposed obliquely with respect to the diffusing surface.

6. A device according to Claim 5, characterized in that the diaphragms (21, 22) and the receiving surface of the photodetection means (1) are situated all on one side of the diffusor element (10) and that the diffusing layer (10) is situated on an even surface of a mechanical means (20) which constitutes the support of the entire device.

7. A device according to Claim 5 or 6, characterized in that the optical receiver further comprises a protection cap (26) made of a transparent material and being conceived to constitute an optical filter which selects the frequency band of operation.

8. The use of an optoelectric detection device according to any one of Claims 1 to 7 for realizing a laser radiation detection device and characterized in that means are provided to treat the detected signals (7), these means replying to the countermeasure application and/or IFF responder.

O O21 887

FIG.1

FIG.2

FIG.3

FIG.4

0021 887

FIG. 5

FIG. 6

FIG. 7

2

FIG. 8

FIG. 9

FIG. 10

FIG. 12

3

FIG. 14

FIG. 13

FIG. 11

FIG. 15